# EUROPÄISCHE PATENTANMELDUNG

(11) **EP 3 006 958 A2**
(43) Veröffentlichungstag der Anmeldung: **13.04.2016**
(21) Anmeldenummer: 15184724.1
(22) Anmeldetag: 10.09.2015
(51) Int. Cl.: G01S 19/34, G01S 5/00

(54) **VERFAHREN UND VORRICHTUNG ZUR POSITIONSÜBERWACHUNG EINES BEWEGLICHEN OBJEKTS**

(30) Priorität: 19.09.2014 DE 102014218947
(71) Anmelder: ASPion GmbH, 76149 Karlsruhe (DE)
(72) Erfinder: Wöhr, Michael, 76149 Karlsruhe (DE)
(74) Vertreter: Lemcke, Brommer & Partner Patentanwälte Partnerschaft mbB

(57) **Zusammenfassung**

Um eine Vorrichtung und ein entsprechendes Verfahren anzugeben, welche eine Positionsüberwachung von beweglichen Objekten mittels batteriebetriebener Sensoren ermöglichen und hierbei Standzeiten bis hin zu mehreren Jahren erreichen können, wird bei einer Vorrichtung zur Positionsüberwachung eines beweglichen Objektes, welche ein Funksende- und Empfangsmodul zum Austausch von Nachrichtensignalen mit einer Funkgegenstelle und einen Funkortungsempfänger für ein vorzugsweise satellitengestütztes Funkortungssystem zur Positionsbestimmung anhand empfangener Funksignale aufweist, ein Initialsensor vorgesehen, der zur Erkennung eines Bewegungszustandes des beweglichen Objektes dient. Der Initialsensor ist derart mit dem Funkortungsempfänger gekoppelt, dass er den Funkortungsempfänger nach Erkennung eines Bewegungszustandes aus einem inaktiven Zustand aktiviert und eine Positionsbestimmung auslöst. Die ermittelten Positionsdaten werden von dem Funksende- und Empfangsmodul anschließend an die Funkgegenstelle übertragen.

## Beschreibung

Die vorliegende Erfindung betrifft eine Vorrichtung sowie ein entsprechendes Verfahren zur Positionsüberwachung eines beweglichen Objekts mit einem Funksende- und Empfangsmodul zum Austausch von Nachrichtensignalen mit einer Funkgegenstelle und mit einem Funkortungsempfänger für ein vorzugsweise satellitengestütztes Funkortungssystem zur Positionsbestimmung anhand empfangener Funkortungssignale. Außerdem betrifft die Erfindung ein Computersystem zur Positionsüberwachung von beweglichen Objekten.

Systeme zur Positionsbestimmung werden verwendet, um bewegliche Objekte zu orten. Ein solches System ist beispielsweise in der Schrift DE 197 55 142 beschrieben. Bei diesem wird in regelmäßigen Zeitabständen die aktuelle Position ermittelt und mit den bereits erfassten Daten ein Profil der Bewegung erstellt. Diese Daten werden entweder über ein Mobilfunknetz oder mittels Satellitenkommunikation an eine Zentrale übermittelt und verarbeitet oder, sofern keine Verbindung zu der Zentrale gegeben ist, aufgezeichnet.

Aus der Schrift US 5,959,568 ist ein Asset Management System auf Basis eines Sensornetzwerks beschrieben, bei dem eine Mehrzahl von Sensoren über Kurzstreckenfunk mit einer lokalen Steuerung Daten austauschen. Die lokale Steuerung ist hierbei einer mobilen Logistikeinheit wie z. B. einem LKW, einem Frachtcontainer oder einem Zug zugeordnet und steht über ein Mobilfunknetz mit einer Operationszentrale in Verbindung. Die mobile Logistikeinheit kann auch einen GPS-Sensor enthalten, so dass die Logistikeinheit jederzeit Ihre geografische Position ermitteln und an die Operationszentrale übertragen kann.

Da die Funkübertragung über ein Mobilfunknetz, wie auch die Positionsbestimmung über ein Satellitennavigationssystem aufgrund der Sendeleistung und des erforderlichen Rechenaufwandes einen sehr hohen Verbrauch an elektrischer Energie erfordern, müssen die entsprechenden übertragungstechnischen Vorrichtungen im Stand der Technik mit einer leistungsfähigen Stromversorgung, wie etwa dem Bord-Netz eines LKWs oder Zuges verbunden werden. Erfolgt die Stromversorgung eines GPS-Empfängers und zugehörigem Mobilfunksenders hingegen über eine interne Batterie, so ist die Standzeit eines entsprechenden Sensors vergleichbar mit der Standzeit zu Mobilfunkendgeräten auf wenige Tage bis maximal einige Wochen beschränkt.

Eine Aufgabe der Erfindung besteht darin, eine Vorrichtung und ein entsprechendes Verfahren anzugeben, welche eine Positionsüberwachung von beweglichen Objekten mittels batteriebetriebener Sensoren ermöglichen und hierbei Standzeiten bis hin zu mehreren Jahren erreichen können.

Die Aufgabe wird gelöst durch eine Vorrichtung nach Anspruch 1 bzw. ein Verfahren nach Anspruch 14. Ein computerimplementiertes System zur Positionsüberwachung von beweglichen Objekten ist in Anspruch 13 angegeben. Vorteilhafte Ausgestaltungen sind den abhängigen Ansprüchen zu entnehmen.

Bei einer Vorrichtung zur Positionsüberwachung eines beweglichen Objektes, welche ein Funksende- und Empfangsmodul zum Austausch von Nachrichtensignalen mit einer Funkgegenstelle und einen Funkortungsempfänger für ein vorzugsweise satellitengestütztes Funkortungssystem zur Positionsbestimmung anhand empfangener Funksignale aufweist, ist erfindungsgemäß ein Initialsensor vorgesehen, der zur Erkennung eines Bewegungszustandes des beweglichen Objektes dient. Durch den Initialsensor wird ein Bewegungszustand als überschreiten eines Grenzwertes aufgrund einer Beschleunigung bzw. gleichförmigen Bewegung erkannt. Der Initialsensor ist derart mit dem Funkortungsempfänger gekoppelt, dass er den Funkortungsempfänger nach Erkennung eines Bewegungszustandes aus einem inaktiven Zustand aktiviert und eine Positionsbestimmung auslöst. Die ermittelten Positionsdaten werden von dem Funksende- und Empfangsmodul anschließend an die Funkgegenstelle übertragen. Eine solche Vorrichtung zur Positionsüberwachung wird im Folgenden auch als Sensor bezeichnet.

Die Erfindung basiert hierbei auf der Erkenntnis, dass der Weg eines Sensors von einer Ausgangsposition in eine Endposition bei einer Vielzahl von Anwendungen keine Rolle spielt. In einer zentralen Auswerteeinheit ist stets die zuletzt bekannte Position des Sensors hinterlegt. Erst nachdem erkannt wurde, dass ein überwachtes Objekt mit dem zugeordneten Sensor bewegt und somit eine Positionsänderung des Objektes vorgenommen wurde, wird der Funkortungsempfänger kurzzeitig aktiviert, um die neue Position zu bestimmen und an die Auswerteeinheit zu übertragen. Solange sich das überwachte Objekt und damit der Sensor sich dagegen in Ruhe befinden, sind die wesentlichen Komponenten des Sensors im Stromsparmodus, so dass der Stromverbrauch reduziert ist. Mit anderen Worten, erst nachdem eine Bewegung detektiert wurde, wird erfindungsgemäß eine neue Position ermittelt.

Erfindungsgemäße Sensoren können im Bereich der Intralogistik auf großen, abgegrenzten Geländen zum Einsatz kommen und werden an oder in beweglichen Objekten angebracht. Neben der Position kann auch das Bewegen des Objektes zum Zwecke des Diebstahlschutzes detektiert und an eine Zentrale gemeldet werden.

Die Vorrichtung ist vorzugsweise mit einer Prozessorsteuerung versehen, welche ausgebildet ist, das Funksende- und Empfangsmodul und den Funkortungsempfänger unabhängig voneinander aus einem inaktiven Betriebszustand aufzuwecken. Auf diese Weise kann jeweils lediglich die Funktionsgruppe, die aktuell benötigt wird, aktiviert werden, um den Gesamtstromverbrauch der Vorrichtung möglichst niedrig zu halten.

Bei einer bevorzugten Ausführungsform ist die Prozessorsteuerung so ausgebildet, dass sie das Funksende- und Empfangsmodul in vorzugsweise zufällig vorbestimmten Zeitabschnitten aktiviert um ein Lebenszeichen in Form einer Statusmeldung mit mindestens einem Identifizierungscode zu senden. Außerdem ist die Prozessorsteuerung so ausgebildet, dass sie nach Erkennen eines Bewegungszustandes des beweglichen Objektes zunächst den Funkortungsempfänger aktiviert, um eine Positionsbestimmung auszuführen und anschließend das Funksende- und Empfangsmodul aktiviert, um eine Nachricht mit ermittelten Positionsdaten zu übertragen.

Die Statusmeldungen identifizieren die Vorrichtung und damit das mit der Vorrichtung überwachte bewegliche Objekt eindeutig und bestätigen der Zentrale, dass das entsprechende Objekt noch an der zuletzt bekannten Position vorhanden ist. Mit der Statusmeldung können auch die zuletzt ermittelten und im Sensor gespeicherten Positionsdaten mit übertragen werden, ohne dass eine neue Positionsermittlung ausgeführt wird, zu deren Zweck der Funkortungsempfänger aktiviert werden müsste. Wird dagegen ein Bewegungszustand erkannt, so wird der Funkortungsempfänger aktiviert, eine Positionsbestimmung ausgelöst und der Zentrale die neue Position mitgeteilt.

Besonders vorteilhaft ist es hierbei, wenn eine neue Positionsbestimmung erst nach Ablauf einer Totzeit nach Erkennen einer Beendigung eines Bewegungszustandes ausgeführt wird, wenn sich das überwachte Objekt also wieder in Ruhe befindet. Hierdurch werden unnötige Positionsmessungen vermieden, während sich das überwachte Objekt noch in Bewegung und noch nicht am neuen Lagerort befindet, wenn also eine Bewegung des Objektes über einen längeren Zeitraum andauert.

Wird das Funksende- und Empfangsmodul so ausgebildet, dass sie nach Senden eines Nachrichtensignals noch für eine vorbestimmte Zeitspanne aktiv bleibt und hierbei in einen Empfangsmodus wechselt, so kann die Vorrichtung während dieser vorbestimmten Zeitspanne Nachrichtensignale empfangen und so von der Zentrale angesprochen werden, beispielsweise um die Konfiguration der Vorrichtung zu ändern, bestimmte Betriebsparameter abzufragen, oder bestimmte Aktionen auszuführen, wie etwa eine neue Bestimmung der aktuellen Position. Nach Ablauf der vorbestimmten Zeitspanne wechselt das Funksende- und Empfangsmodul anschließend in einen inaktiven Betriebszustand, in welchem die Vorrichtung nicht mehr von außen angesprochen werden kann. Auf diese Weise wird eine maximale Stromersparnis erreicht, da der Empfangsmodus nur für relativ kurze Zeitspannen, die der Zentrale nach Erhalt einer Nachricht zur Verfügung stehen, aktiviert sein muss.

Bei einer bevorzugten Anwendung ist das Funksende- und Empfangsmodul zum Senden und Empfangen von Nachrichtensignalen in einem für Kurzstreckenfunk bereitgestellten Frequenzband vorgesehen, beispielsweise in einem der Frequenzbänder 433 MHz, 868 MHz oder 915 MHz. Hier handelt es sich um so genannte SRD-Bänder (Short Range Devices) die für Kurzstreckenfunk mit niedriger Übertragungsleistung zur Verfügung stehen. Diese Frequenzbereiche eignen sich besonders zur Positionsüberwachung von beweglichen Objekten im Bereich der Intralogistik, beispielsweise auf abgegrenzten Außengeländen. Auf dem überwachten Außengelände werden als Funkgegenstellen entsprechende Router installiert, die den Kurzstreckenfunk der Vorrichtungen empfangen und an eine Zentrale weiterleiten bzw. Konfigurationsdaten an die Vorrichtung übertragen. Die Empfangsbereiche der Router überlappen sich hierbei derart, dass eine Funkabdeckung des gesamten überwachten Geländes erreicht wird.

Zur weiteren Senkung des Stromverbrauches kann auch die Prozessorsteuerung selbst in einen Energiesparmodus wechseln, aus dem sie nach Ablauf vorbestimmter Zeitabschnitte oder nach Erhalt eines Interrupts von dem Initialsensor aufgeweckt und wieder in einen aktiven Betriebsmodus versetzt wird, in welchem eine Statusmeldung oder eine Nachricht mit ermittelten Positionsdaten übertragen werden kann um anschließend wieder in den Energiesparmodus zu wechseln.

Als besonders vorteilhaft erweist es sich auch, wenn von dem Funksende- und Empfangsmodul gesendete Nachrichten zusätzlich eine Information betreffend des Batteriezustandes, z.B. anhand der Batteriespannung, ihrer zur Stromversorgung vorgesehenen Batterie enthalten. Hierdurch ist die Zentrale jederzeit in Kenntnis über den Batteriezustand der einzelnen Sensoren und kann rechtzeitig einen Austausch durch das Wartungspersonal anfordern.

Als weitere Maßnahme zum Diebstahlschutz kann weiterhin vorgesehen sein, dass von dem Funksende- und Empfangsmodul gesendete Nachrichten eine laufende Nummer und eine über zumindest einen Teil der Nachricht berechnete Prüfsumme enthalten. Auf diese Weise wird verhindert, dass Nachrichten aufgezeichnet und dem Router vorgespielt werden, während das überwachte Objekt selbst gerade unerlaubt entfernt wird.

Bei einer besonders vorteilhaften Weiterbildung, die insbesondere bei den zuvor beschriebenen Sensoren, daneben aber auch bei beliebigen anderen Anwendungen und Vorrichtungen zum Einsatz kommen kann, wird weiterhin als Sabotageschutz ein Schutz gegen unerlaubtes Öffnen der Vorrichtung vorgesehen. Hierbei ist ein im Wesentlichen lichtdichtes Gehäuse vorgesehen, welches eine elektronische Schaltung zur Erkennung eines Öffnens des Gehäuses enthält.

Die Schaltung weist einen Lichtsensor und eine Lichtquelle auf, wobei die Lichtquelle derart angesteuert ist, dass sie in vorgegebenen Zeitabständen Lichtimpulse aussendet und wobei der Lichtempfänger zur Erkennung eines von einem vorgegebenen Erkennungsmuster abweichenden Lichtmusters ausgebildet ist, aus dem auf ein Öffnen des Gehäuses geschlossen werden kann. Eine solche Schaltung lässt sich äußerst einfach realisieren und bewirkt einen effektiven Schutz gegen unerlaubtes Öffnen des Gehäuses zum Zwecke einer Manipulation der Vorrichtung.

Wird das Gehäuse bei Tageslicht geöffnet, so wird das einfallende Licht unmittelbar von dem Lichtsensor erkannt und eine entsprechende Fehler- bzw. Alarmmeldung erzeugt. Selbst wenn das Gehäuse jedoch im Dunkeln geöffnet wird, so wird dieser Umstand daran erkannt, dass sich die Reflexion der von der Lichtquelle erzeugten Lichtimpulse innerhalb des Gehäuses verändert, so dass ein anderes als das erwartete Lichtmuster detektiert wird und somit ebenfalls eine Fehler- bzw. Alarmmeldung erzeugt werden kann.

Als Lichtsensor und Lichtquelle können zwei Leuchtdioden vorgesehen sein, von denen eine als Lichtquelle in Durchlassrichtung und die andere als Lichtsensor in Sperrrichtung betrieben wird. Somit lässt sich eine äußerst kostengünstige und stromsparende Schaltung realisieren. Die Sicherheit dieser Schaltung gegen Manipulation kann außerdem dadurch weiter erhöht werden, dass die Funktion der beiden Leuchtdioden als Lichtquelle bzw. Lichtsensor in regelmäßigen oder unregelmäßigen Zeitabständen wechselt. Vorzugsweise wird die Schaltung mit einem Mikrocontroller realisiert, der entsprechend programmiert wird, um Lichtsensor und Lichtquelle bzw. die Leuchtdioden in der erfindungsgemäßen Weise anzusteuern, also z.B. Lichtsignale abzugeben und eine Kapazität der in Sperrrichtung betriebenen Leuchtdiode beispielsweise durch Messung einer Entladezeit zu bestimmen.

Erfindungsgemäß wird außerdem ein System zur Positionsüberwachung von beweglichen Objekten angegeben, bei dem jedes der zu überwachenden beweglichen Objekte mit einer Vorrichtung der zuvor beschriebenen Art ausgestattet ist. Das System weist außerdem mindestens eine Funkgegenstelle zum Empfangen der von den einzelnen Vorrichtungen gesendeten Nachrichten auf. Mit der mindestens einen Funkgegenstelle ist ein Computersystem verbunden, welches programmtechnisch eingerichtet ist, die erhaltenen Nachrichten auszuwerten und für jedes der überwachten Objekte einen Lagerort entsprechend der zuletzt empfangenen Positionsdaten zu speichern und diese Positionsdaten auf Anfrage eines Benutzers auszugeben. Somit wird ein System geschaffen, welches den aktuellen Lagerort für eine Vielzahl von Objekten in einem überwachten Areal verwalten kann und mit dessen Hilfe ein Benutzer für jedes der verwalteten Objekte den aktuelle Lagerort abfragen kann.

Weitere Eigenschaften und Vorteile der Erfindung werden anhand der Ausführungsbeispiele und der beigefügten Zeichnungen beschrieben. Hierbei zeigt
- Figur 1: ein Blockschaltbild eines erfindungsgemäßen Systems zur Positionsüberwachung beweglicher Objekte,
- Figur 2a: ein Ablaufdiagramm des erfindungsgemäßen Verfahrens zur Positionsüberwachung beweglicher Objekte,
- Figur 2b: ein Ablaufdiagramm der bei dem Verfahren verwendeten Unterroutine zur Erkennung eines Bewegungszustandes,
- Figur 2c: ein Ablaufdiagramm der bei dem Verfahren verwendeten Unterroutine zur Ermittlung neuer Positionsdaten,
- Figur 3: eine Schaltung zur Erkennung eines Öffnens eines Gehäuses, und
- Figur 4: ein Ablaufdiagramm, welches von dem Mikroprozessor in Figur 3 im Betrieb abgearbeitet wird.

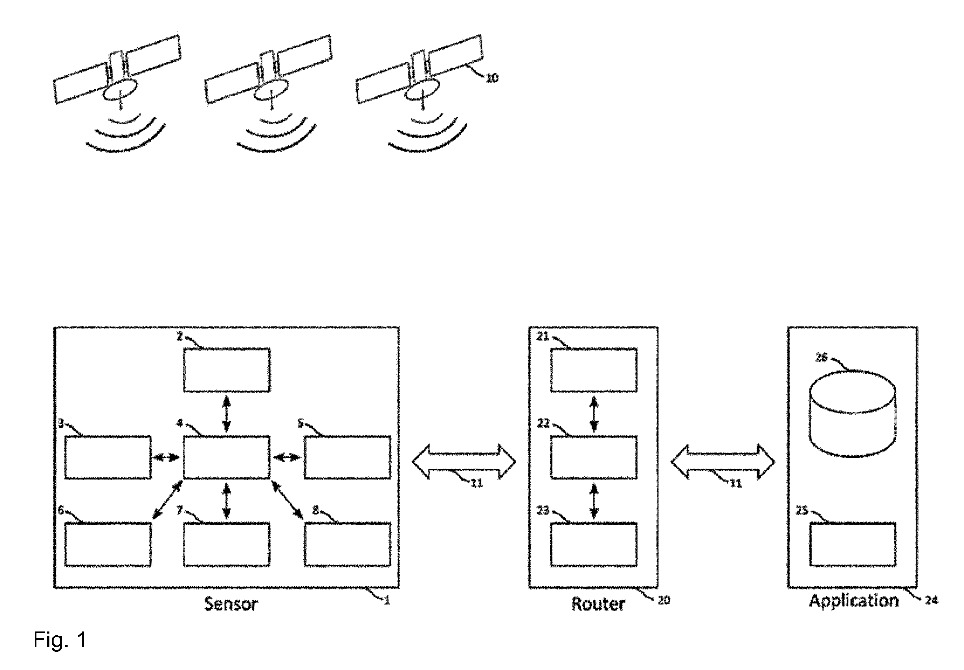

Eine Übersicht über ein System zur Positionsüberwachung beweglicher Objekten ist in Figur 1 in einem Blockschaltbild gezeigt. Das System weist eine als Sensor bezeichnete Vorrichtung 1 auf, die einen Funkortungsempfänger 2 (z.B. einen GPS-Empfänger) für ein globales Satellitennavigationssystem, einen Initialsensor 3, einen Mikroprozessor mit integriertem Speicher 4, ein Funksende- und Empfangsmodul (ein sogenannter RF-Transceiver) 5, eine Schaltung 6 zur Spannungsüberwachung einer internen Batterie 7, die Batterie 7 zur Stromversorgung des Sensors, sowie ein oder mehrere zusätzliche Sensoren 8 aufweist.

Über eine Funkschnittstelle 11 ist der Sensor 1 mit einem als Funkgegenstelle dienenden Router 20 verbunden. Dieser weist ein Funksende- und Empfangsmodul 21, einen Mikroprozessor 22 und eine Stromversorgung 23 auf. Über eine Datenschnittstelle 11' ist der Router 20 mit einem Computersystem 24 verbunden, welches einen Anwendungsserver 25 und eine Datenbank 26 umfasst.

Der Sensor 1 dient dazu, an einem zu überwachenden Objekt befestigt zu werden. Mit seinem Funkortungsempfänger 2 bestimmt der Sensor 1 die geografische Position anhand empfangener Funkortungssignale des globalen Satellitennavigationssystems 10, beispielsweise des von den USA betriebenen Systems GPS oder des von der Europäischen Union betriebenen Systems Galileo. Dabei wird der Funkortungsempfänger 2 über den Mikroprozessor 4 durch den InitiaIsensor 3 aktiviert, um eine Positionsbestimmung durchzuführen.

Als Initialsensor 3 kann beispielsweise ein Dreiachsenbeschleunigungssensor, ein Gyroskop oder ein Magnetfeldsensor verwendet werden. Andere Arten von Sensoren, mit denen ein Bewegungszustand erkannt werden kann, können natürlich gleichermaßen Verwendung finden.

Gesteuert von dem Mikroprozessor 4 werden die von dem Funkortungsempfänger 2 ermittelten Positionsdaten über das Funksende- und Empfangsmodul 5 zusammen mit zusätzlichen Daten, wie z. B. der Batteriespannung, Datum und Uhrzeit, oder weiteren Sensordaten mittels Funkübertragung an den Router 20 übermittelt.

Ein oder mehrere Router 20 nehmen die Positions- und Sensordaten entgegen und leiten diese über eine Datenschnittstelle 11', beispielsweise eine LAN-Verbindung oder eine Mobilfunkverbindung, an einen oder mehrere Anwendungsserver 24 weiter. Im Anwendungsserver 24 werden die Daten ausgewertet und gespeichert. Außerdem können verschiedene Einstellungen für den Router 20 und die Sensoren 1 konfiguriert werden. Letztere Konfigurationsdaten werden über den Router 20 an die Sensoren 1 gesendet und dort gespeichert.

Die Funkübertragung zwischen Sensor 1 und Router 20 erfolgt im Ausführungsbeispiel, ohne dass die Erfindung hierauf beschränkt wäre, mittels Kurzstreckenfunk über eines der ISM-Bänder (Industrial, Sientific, and Medical Band), wahlweise über das ISM-Band 434 MHz, das ISM-Band 915 MHz oder das SRD-Band 868 MHz (SRD: Short Range Devices). Sende- und Empfangsmodule, sogenannte Transceiver, für diese Funkbänder sind kostengünstig als integrierte Schaltungen am Markt erhältlich, und ermöglichen einen stromsparenden Betrieb. Sie erreichen eine Reichweite von etwa 50 bis 100 m, die sich durch den Einsatz von auf dem überwachten Gelände stationierten Repeatern noch erhöhen lässt. Ein zu überwachendes Gelände wird somit in Abhängigkeit der erreichbaren Reichweite der verwendeten Funktechnologie mit einer entsprechenden Anzahl von Routern 20, die auch als Basisstation bezeichnet werden, ausgestattet, um eine ausreichende Funkablenkung zu gewährleisten.

Die Lokalisierung eines mit dem Sensor 1 ausgestatteten beweglichen Objekts innerhalb des überwachten Geländes erfolgt vorzugsweise in Ruhe, nicht aber während einer Bewegung des Objekts. Wird über den Initialsensor 3 ein Bewegungszustand detektiert, so kann dennoch sofort eine entsprechende Nachricht gesendet werden, welche anzeigt, dass das Objekt nun bewegt wird. Wird in der Anwendungssoftware des Servers 25 erkannt, dass die Bewegung des Objekts nicht autorisiert ist, so kann ein entsprechender Alarm ausgelöst und beispielsweise der Betriebsschutz zur letzten übermittelten Position des Objekts geschickt werden.

Endet der Bewegungszustand und das Objekt befindet sich wieder in Ruhe, so wird eine Positionsbestimmung über den Funkortungsempfänger 2 initiiert und eine Nachricht mit der neuen Position versendet. Zusätzlich oder alternativ kann auch über den Router 20 ein Anforderungssignal an den Sensor 1 gesendet werden, mit dem eine Positionsbestimmung angefordert und entsprechend von dem Sensor 1 durchgeführt wird.

Wird von dem Sensor 1 eine Nachricht versendet, so erfolgt in der Regel keine Rückbestätigung. Vielmehr schaltet der Mikroprozessor 4 das Funksende- und Empfangsmodul 5 für einen kurzen Zeitraum von beispielsweise 3 bis 5 ms in einen Empfangszustand, in welchem Nachrichten von dem Anwendungsserver 25 empfangen werden können. Anschließend wird der Transceiver 5 deaktiviert, um unnötigen Stromverbrauch zu reduzieren. Die Erfindung ist jedoch nicht auf einen kurzen Zeitraum wie angegeben beschränkt. Vielmehr kann der Zeitraum von einigen Millisekunden bis hin zu mehreren Sekunden betragen, abhängig vom Zeitraum zwischen den einzelnen Lebenszeichen.

Über den Transceiver 5 werden in bestimmten Zeitabständen Lebenszeichen in Form von Statusmeldungen gesendet. Die Zeitabstände zwischen den Lebenszeichen sind hierbei vorzugsweise nicht konstant, sondern werden innerhalb eines konfigurierbaren Bereichs von beispielsweise 2 bis 10 s zufällig bestimmt. Die Lebenszeichen erhalten außerdem eine laufende Nummer sowie eine Prüfsumme, mit der die Sicherheit der Nachrichten gegen Manipulation, beispielsweise in Form von Wiederholungen abgehörter Nachrichten, erhöht werden kann. Auch hier ist die Erfindung natürlich nicht auf den im Ausführungsbeispiel angegebenen Zeitabstand zwischen den Lebenszeichen beschränkt. Vielmehr können je nach Anwendung die Lebenszeichen in Intervallen von wenigen Sekunden bis hin zu einigen Stunden gesendet werden. Entsprechend kann wie weiter oben erwähnt, auch der Zeitraum gewählt werden, für den der Transceiver nach dem Senden eines Lebenszeichens aktiviert bleibt.

Die Nachrichten werden in Form von Datentelegrammen vorgegebener Länge, beispielsweise von 2 ms Dauer bei einer Übertragungsrate von 100 kbit/s, gesendet. Die Aktivierung des Transceivers 5 erfolgt hierbei beispielsweise für 10 ms. Bei einem durchschnittlichen Abstand zwischen den einzelnen Nachrichten von etwa 10 s ergibt sich somit insgesamt eine Aktivierungsdauer von lediglich 1 %oder Gesamtzeit, was zu erheblicher Stromeinsparung beiträgt.

Die Genauigkeit der Positionsbestimmung beispielsweise unter Verwendung des herkömmlichen GPS-Systems beträgt zwischen 1 und 10 m. Durch Verwendung zusätzlicher terrestrischer Referenzstationen kann diese Messgenauigkeit auch weiter gesteigert werden. Sie reicht jedoch aus, um beispielsweise Fahrzeuge auf einem Parkplatz oder Gitterboxen auf einem Firmengelände zu lokalisieren. Hauptanwendungsbereich der erfindungsgemäßen Sensoren ist hierbei im Freien, da Positionsbestimmung und Sendeleistung des Transceivers nicht durch Gebäudeteile versperrt bzw. eingeschränkt werden.

Neben einen Satellitenortungssystem können natürlich auch terrestrische Funkortungssysteme zum Einsatz kommen, beispielsweise in Form entsprechender auf dem überwachten Gelände installierter Referenzsender, welche Funkortungssignale aussenden, aus denen durch Korrelation und zeitliche Verschiebung eine relative Positionsbestimmung im Wege einer Triangulation erfolgen kann.

Als zusätzlicher Sensor 8 kann beispielsweise ein Sensor zur räumlichen Lageerkennung verwendet werden, mit dessen Hilfe Manipulationen an dem Sensor 1, wie beispielsweise ein unerlaubtes Entfernen des Sensors 1 von dem zu überwachenden Objekt, detektiert werden können.

Besonders vorteilhaft ist außerdem die Verwendung einer Schaltung, mit deren Hilfe sich ein unerlaubtes Öffnen des Gehäuses des Sensors 1 erkennen lässt. Eine solche Schaltung kann auf einfache Weise mittels zweier Leuchtdioden realisiert werden, von denen eine in Sperrrichtung als lichtempfindlicher Kondensator, die andere als Lichtquelle betrieben wird. Wird von der einen Leuchtdiode ein Lichtimpuls abgegeben, so wird dieser als Änderung der Kapazität der in Sperrrichtung betriebenen zweiten LED detektiert. Wird das Gehäuse unerlaubt geöffnet, so entweicht ein Teil des Lichts aus dem Gehäuse und wird nicht an der Gehäuseinnenseite reflektiert, so dass eine detektierte Kapazitätsänderung nicht der erwarteten entspricht. Außerdem ändert sich durch einfallendes Licht zusätzlich die Kapazität der in Sperrrichtung betriebenen Leuchtdiode, was ebenfalls nicht dem erwarteten Erkennungsmuster entspricht. Somit kann mit einfachen Mitteln eine Schaltung zur Erkennung von externen Manipulationen durch Öffnen des Gehäuses realisiert werden. Wird ein solcher Zustand erkannt, so kann ein entsprechendes Alarmsignal gesendet werden und die Zentrale kann daraufhin beispielsweise den Werksschutz zum letzten Lagerort des überwachten Objektes schicken.

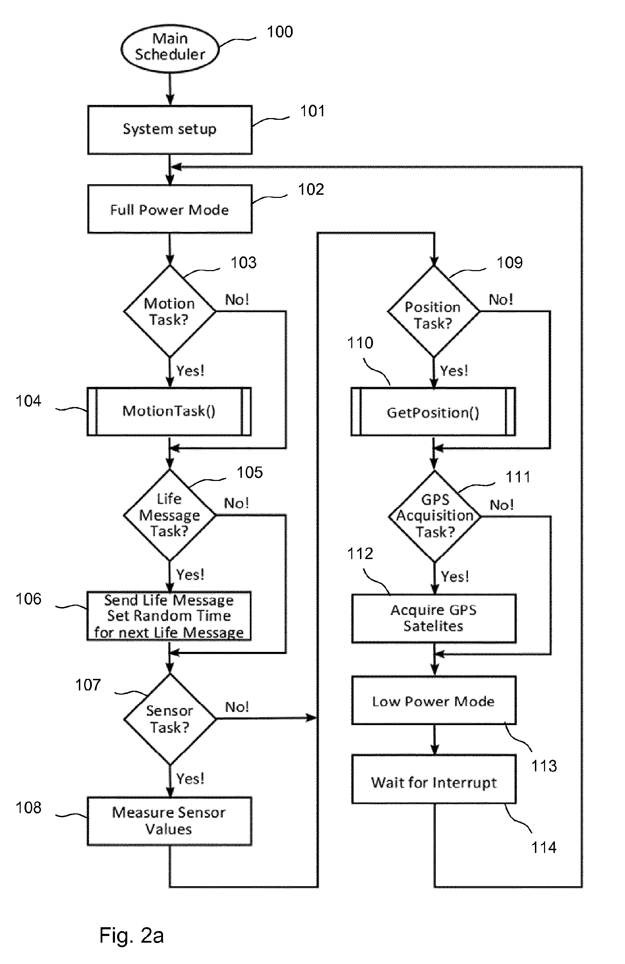

Ein Flussdiagramm für den Main Scheduler des von dem Mikroprozessor 4 ausgeführten Verfahrens bzw. der in seinem Speicher abgelegten Software ist in Figur 2a gezeigt. Der Main Scheduler 100 führt zunächst ein Systemsetup 101 aus. Hierbei wird die Software gestartet, der Betriebszustand des Sensors 1 auf ordnungsgemäße Funktionalität überprüft und gegebenenfalls eine Konfiguration verschiedener Parameter durchgeführt. Der Mikroprozessor 4 befindet sich nun im so genannten Full Power Mode 102, also dem normalen Betriebszustand.

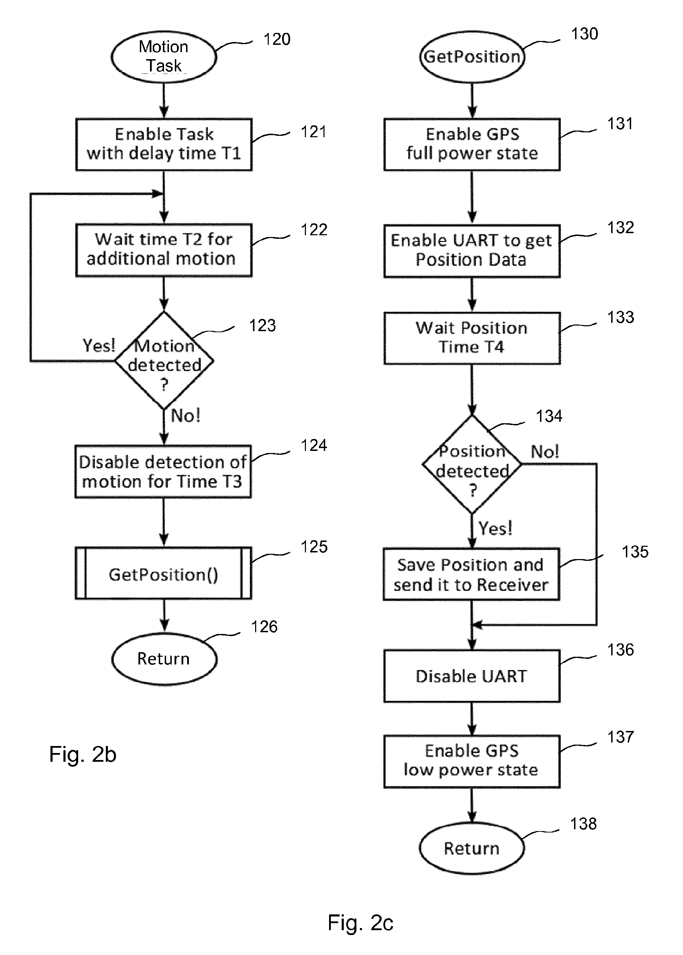

Nun erfolgt eine Abfrage 103, ob eine Überprüfung auf einem Bewegungszustand mit Hilfe des Initialsensors 3 durchgeführt werden soll. Wenn eine Überprüfung durchgeführt werden soll, wird in Schritt 104 die in Figur 2b dargestellte Teilroutine Motion Event ausgeführt. Anderenfalls wird dieser Schritt übersprungen.

Nun erfolgt in Schritt 105 eine Überprüfung darauf, ob ein Lebenszeichen gesendet werden soll. Das Ergebnis hängt davon ab, ob die vorbestimmte Zeitspanne bis zum Senden des nächstfolgenden Lebenszeichens bereits abgelaufen ist oder aufgrund einer Bewegung eine Positionsänderung stattgefunden hat. Ist dies der Fall, so wird in Schritt 106 ein neues Lebenszeichen generiert und über den Transceiver 5 gesendet. Anschließend wird eine neue Zufallszeit für das nächste Lebenszeichen festgelegt. Ist dagegen die Zeit bis zum Senden des nächsten Lebenszeichens noch nicht abgelaufen oder hat keine Bewegung stattgefunden, so wird dieser Schritt übersprungen.

Anschließend wird in Schritt 107 geprüft, ob weitere Sensordaten abgefragt werden sollen, beispielsweise ob mittels einer der LEDs ein Lichtimpuls generiert und mit der zweiten LED geprüft werden soll, ob ein unerlaubtes Öffnen des Gehäuses vorliegt. Ist dies der Fall, so wird in Schritt 108 die entsprechende Sensormessung durchgeführt. Anderenfalls wird dieser Schritt übersprungen.

In Schritt 109 erfolgt nun eine Überprüfung, ob eine neue Positionsbestimmung mit Hilfe des Funkortungsempfängers 2 durchgeführt werden soll, beispielsweise weil eine entsprechende Anforderung vom Anwendungsserver 25 vorliegt. Ist dies der Fall, so wird in Schritt 110 die in Figur 2c dargestellte Unterroutine GetPosition ausgeführt. Anderenfalls wird dieser Schritt übersprungen.

Als nächstes wird in Schritt 111 überprüft, ob die für eine Positionsbestimmung wichtige Satellitenposition noch aktuell ist. Ist dies nicht der Fall, so wird der Funkortungsempfänger 2 kurzzeitig aktiviert und ein Satellitensuchlauf durchgeführt. Anderenfalls wird der Schritt 112 übersprungen.

Anschließend wird in Schritt 113 der Mikroprozessor 4 in den Energiesparmodus versetzt und wartet nun in Schritt 114 bis er durch einen Interrupt wieder aufgeweckt und in den Full Power Mode 102 versetzt wird. Ein solcher Interrupt kann entweder von dem Initialsensor 3 oder von einer in dem Mikroprozessor enthaltenen Zeitsteuerung erzeugt werden.

In Figur 2b ist die Teilroutine zur Erkennung eines Bewegungszustandes dargestellt. Die Routine Motion Event wird in Schritt 120 gestartet, in dem der Initialsensor 3 beispielsweise eine Bewegung detektiert und einen entsprechenden Interrupt erzeugt. Um die Bewegungsmessung zu ermöglichen, wird in Schritt 121 eine Abfrage von Messwerten des Initialsensors 3 mit einer ersten Verzögerungszeit T1 gestartet. In Schritt 122 wird nun für eine Totzeit T2 gewartet, ob weitere Bewegungen detektiert werden. Ergibt die Abfrage 123, dass der Bewegungszustand fortdauert, weil weitere Bewegungen von dem Sensor 3 detektiert werden, so wird der Schritt 122 wiederholt und für eine weitere Totzeit T2 gewartet, ob weitere Bewegungen detektiert werden. Dies wird solange fortgesetzt, bis der Bewegungssensor für die Dauer der Totzeit T2 keine Bewegung mehr detektiert, das Objekt sich also wieder in Ruhe befindet. In diesem Fall wird in Schritt 124 die Bewegungsmessung durch den Sensor 3 für eine Zeitspanne T3 unterbrochen und in Schritt 125 die in Figur 2c dargestellte Unterroutine GetPosition ausgeführt. Anschließend endet in Schritt 126 die Ausführung der Routine Motion Event.

Die in Figur 2c dargestellte Unterroutine GetPosition startet mit dem Aufruf in Schritt 130. Zunächst wird in Schritt 131 der Funkortungsempfänger 2 aus seinem inaktiven Betriebszustand aktiviert und in den normalen Betriebszustand versetzt. Am Markt erhältlich sind beispielsweise GPS-Empfänger mit so genannter UART Schnittstelle (Universal Asyncronous Receiver Transmitter), einer elektronischen Schaltung die zur Realisierung digitaler serieller Schnittstellen dient. Ein solcher GPS-Empfänger wird auch im Ausführungsbeispiel verwendet. Daher wird in einem Schritt 132 zunächst die UART-Schaltung des GPS-Empfängers aktiviert um die Positionsdaten von dem GPS-Empfänger 2 zu dem Mikroprozessor 4 übertragen zu können. Der GPS-Empfänger 2 führt nun autonom eine Positionsbestimmung durch.

Der Mikroprozessor führt in Schritt 133 eine Warteschleife aus, um eine Zeitspanne T4 abzuwarten, bis die Positionsbestimmung durch den GPS-Empfänger 2 abgeschlossen ist. In Abfrage 134 wird anschließend geprüft, ob der GPS-Empfänger 2 Positionsdaten detektieren konnte. Ist dies der Fall, so werden die neuen Positionsdaten im internen Speicher des Mikroprozessors 4 abgelegt und außerdem an das Funksende- und Empfangsmodul 5 zur Erzeugung einer entsprechenden Nachricht an den Anmeldungsserver 25 gesendet.

Konnten keine Positionsdaten ermittelt werden, beispielsweise weil der Sensor 1 sich innerhalb eines Gebäudes befindet und keine Satellitensignale empfangen kann, so wird dieser Schritt übersprungen. Anschließend wird in Schritt 136 die UART-Schaltung deaktiviert und in Schritt 137 der GPS-Empfänger 2 in einem Energiesparmodus versetzt. In Schritt 138 wird die Unterroutine GetPosition beendet und ein entsprechender Wert (z.B. 0 oder 1) zurückgegeben, der anzeigt, ob die Positionsermittlung erfolgreich war oder nicht.

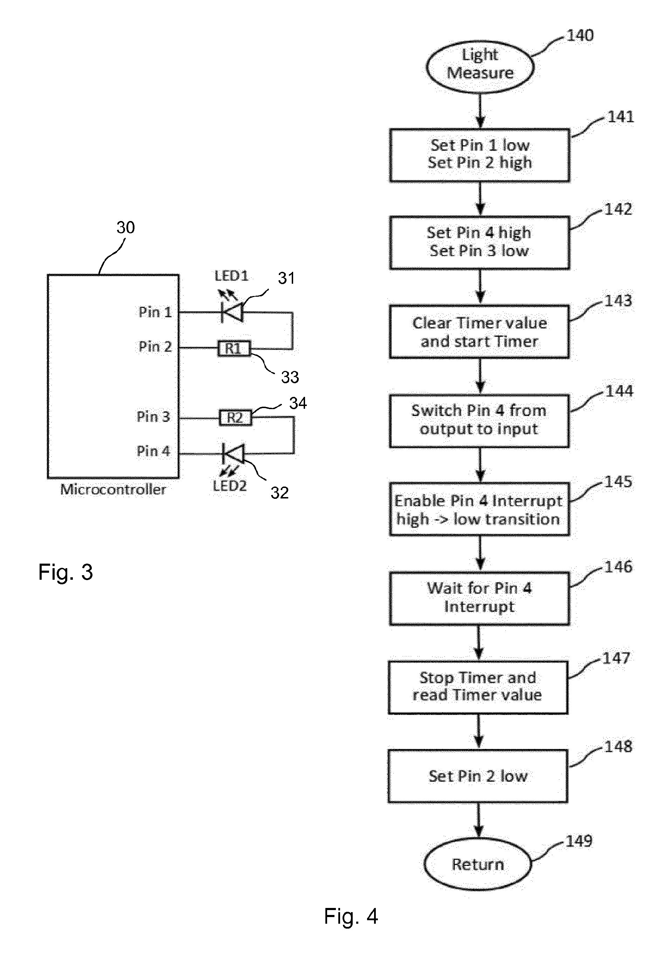

Anhand der Figuren 3 und 4 wird im Folgenden die Funktion der Schaltung zur Überwachung auf eine unbefugte Manipulation am Gehäuse des Sensors näher erläutert. Diese Schaltung ist von der Anwendung bei dem beschriebenen Sensor prinzipiell unabhängig und kann bei jeder Art von elektronischen Geräten bzw. Gehäusen zum Einsatz kommen.

Dieser Aspekt der Erfindung beschreibt somit ein System, mit dem die Öffnung eines im Wesentlichen lichtdichten Gehäuses erkannt werden kann.

Zur Öffnungserkennung von Gehäusen werden im Stand der Technik häufig mechanische Schalter eingesetzt. Diese erfordern einen hohen Entwicklungsaufwand, da die mechanischen Schaltwege auf das jeweilige Gehäuse angepasst werden.

Bei der hier beschriebenen Weiterbildung der Erfindung handelt es sich um eine elektronische Erkennung der Öffnung eines Gehäuses. Bei dieser einfachen und kostengünstigen Methode kommen zwei LED zum Einsatz, die vorzugsweise durch einen Microcontroller angesteuert werden. Als physikalischer Effekt wird die Eigenschaft der LED genutzt, dass sich diese bei Betrieb in Sperrrichtung wie ein Kondensator verhält, dessen Kapazität umgekehrt proportional zum einfallenden Licht ist. Nach dem Abschalten der Spannung in Sperrrichtung entlädt sich dieser Kondensator.

Als weiterer Effekt wird genutzt, dass die Dauer der Entladung eines Kondensators proportional zu seiner Kapazität ist. Diese kann mit einem Microcontroller mittels Timer und Interrupt erfasst werden.

Um eine definierte Lichtmenge zu erzeugen, wird eine zweite LED verwendet, die während der Lichtmessung in Durchlassrichtung angesteuert wird. Das Licht dieser LED reflektiert diffus im Gehäuse und erzeugt somit die definierte Lichtmenge.

Ein Ausführungsbeispiel einer solchen Schaltung ist in Figur 3 dargestellt. Sie umfasst einen Microcontroller 30, also einer programmierbaren Steuereinheit, an den jeweils über zwei korrespondierende Anschluss-Pins je eine Leuchtdiode 31, 32 über einen Vorwiderstand 33, 34 angeschlossen ist. Der Microcontroller wird dabei so programmiert, dass abwechselnd eine der Leuchtdioden 31, 32 einen kurzen Lichtimpuls abgibt, während die andere in Sperrrichtung betrieben wird. Anschließend wird die Entladezeit der in Sperrrichtung betriebenen Leuchtdiode über den betreffenden Vorwiderstand gemessen.

Der Microcontroller 30 ist hierbei nur beispielhaft und stark vereinfacht gezeigt. Tatsächlich kann der Microcontroller 30 wesentlich mehr Anschlusspins aufweisen und gleichzeitig weitere Funktionen ausführen.

Die Messung der Lichtmenge ist in dem in Figur 4 dargestellten Ablaufdiagram, also einer Routine 140 zur Lichtmessung, die von dem Microcontroller 30 abgearbeitet wird, beschrieben und erfolgt in folgenden Schritten:
- Aktivieren der LED2 zur Erzeugung der definierten Lichtmenge in Schritt 141.
- Ansteuerung der LED1 in Sperrrichtung zum Laden der Sperrkapazität in Schritt 142.
- Initialisierung und starten eines Timers in Schritt 143.
- Umschalten des PIN4 am Microcontroller von Ausgang in Eingangsrichtung in Schritt 144 und aktivieren des Interrupts in Schritt 145.
- Nach Auslösung des Interrupts in Schritt 146 wird der Timer gestoppt und der Timer Wert in Schritt 147 ausgelesen.
- Danach wird die LED2 in Schritt 148 wieder deaktiviert und der gemessene Timerwert bezüglich Öffnung des Gehäuses ausgewertet.

Bei geöffnetem Gehäuse und Tageslicht wird eine kleinere Entladezeit gemessen. Diese ist kleiner als die bei geschlossenem Gehäuse und die Öffnung wird erkannt.

Bei geöffnetem Gehäuse bei Nacht bzw. in Dunkelheit gibt es keine Reflektion des Lichts der zweiten LED und es wird eine längere Entladezeit gemessen und die Öffnung erkannt.

## Patentansprüche

1. Vorrichtung (1) zur Positionsüberwachung eines beweglichen Objektes mit
- einem Funksende- und Empfangsmodul (5) zum Austausch von Nachrichtensignalen mit einer Funkgegenstelle (20) und mit
- einem Funkortungsempfänger (2) für ein vorzugsweise satellitengestütztes Funkortungssystem (20) zur Positionsbestimmung anhand empfangener Funkortungssignale,
**gekennzeichnet durch**
- einen Inertialsensor (3) zur Erkennung eines Bewegungszustandes des beweglichen Objektes, der derart mit dem Funkortungsempfänger (2) gekoppelt ist, dass er den Funkortungsempfänger (2) nach Erkennung eines Bewegungszustandes aus einem inaktiven Zustand aktiviert und eine Positionsbestimmung auslöst, und das Funksende- und Empfangsmodul (5) zum anschließenden Übertragung eines Nachrichtensignals mit ermittelten Positionsdaten angesteuert wird.

2. Vorrichtung nach Anspruch 1, mit einer Prozessorsteuerung (4), welche ausgebildet ist, das Funksende- und Empfangsmodul (5) und den Funkortungsempfänger (2) unabhängig voneinander aus einem inaktiven Betriebszustand aufzuwecken.

3. Vorrichtung nach Anspruch 2, bei der die Prozessorsteuerung (4) weiter ausgebildet ist, das Funksende- und Empfangsmodul (5) in vorzugsweise zufällig vorbestimmten Zeitabschnitten zu aktivieren, um eine Statusmeldung mit mindestens einem Identifizierungscode zu senden.

4. Vorrichtung nach Anspruch 2 oder 3, bei der die Prozessorsteuerung (4) weiter ausgebildet ist, nach Erkennung eines Bewegungszustands des beweglichen Objektes den Funkortungsempfänger (2) zu aktivieren, um eine Positionsbestimmung auszuführen, und anschließend das Funksende- und Empfangsmodul (5) zu aktivieren, um eine Nachricht mit ermittelten Positionsdaten zu übertragen.

5. Vorrichtung nach einem der Ansprüche 2 bis 4, bei der die Prozessorsteuerung (5) ausgebildet ist, den Funkortungsempfänger (2) erst nach Ablauf einer Totzeit nach Erkennen einer Beendigung eines Bewegungszustands des beweglichen Objektes zu aktivieren, um eine Positionsbestimmung auszuführen.

6. Vorrichtung nach einem der vorangehenden Ansprüche, bei der das Funksende- und Empfangsmodul (5) ausgebildet ist, nach Senden eines Nachrichtensignals für eine vorbestimmte Zeitspanne in einen Empfangsmodus zu wechseln, um Nachrichtensignale empfangen zu können, und nach Ablauf der vorbestimmten Zeitspanne in einen inaktiven Betriebszustand zu wechseln.

7. Vorrichtung nach einem der vorangehenden Ansprüche, bei der das Funksende- und Empfangsmodul (5) zum Senden und Empfangen von Nachrichtensignalen in einem für Kurzstreckenfunk bereitgestellten Frequenzband, vorzugsweise einem der Frequenzbänder 433 MHz, 868 MHz oder 915 MHz, ausgebildet ist.

8. Vorrichtung nach Anspruch 3, bei der die Prozessorsteuerung (4) nach Ablauf der vorbestimmten Zeitabschnitte oder nach Erhalt eines von dem Inertialsensors (3) erzeugten Interrupts von einem Energiesparmodus in einen Betriebsmodus wechselt, um die Übertragung einer Statusmeldung oder einer Nachricht mit ermittelten Positionsdaten zu veranlassen, und bei der die Prozessorsteuerung (4) anschließend wieder in den Energiesparmodus wechselt.

9. Vorrichtung nach einem der vorangehenden Ansprüche, welche mittels einer Batterie (7) mit elektrischer Energie versorgt ist und welche derart ausgebildet ist, dass von dem Funksende- und Empfangsmodul (5) gesendete Nachrichten eine Information betreffend des Batteriezustands enthalten.

10. Vorrichtung nach einem der vorangehenden Ansprüche, welche derart ausgebildet ist, dass von dem Funksende- und Empfangsmodul (5) gesendete Nachrichten eine laufende Nummer und eine über zumindest einen Teil der Nachricht berechnete Prüfsumme enthalten.

11. Vorrichtung insbesondere nach einem der vorangehenden Ansprüche, mit einem im Wesentlichen lichtdichten Gehäuse und einer elektronischen Schaltung (8) zur Erkennung eines Öffnen des Gehäuses, wobei die Schaltung einen Lichtsensor und eine Lichtquelle umfasst, wobei die Lichtquelle derart angesteuert ist, dass sie in vorgegebenen Zeitabständen Lichtimpulse aussendet und wobei der Lichtempfänger zur Erkennung eines von einem vorgegebenen Erkennungsmuster abweichenden Lichtmusters ausgebildet ist, aus dem auf ein Öffnen des Gehäuses geschlossen werden kann.

12. Vorrichtung nach Anspruch 11, als Lichtsensor und als Lichtquelle zwei Leuchtdioden vorgesehen sind, von denen eine als Lichtquelle in Durchlassrichtung und die andere als Lichtsensor in Sperrrichtung betrieben werden.

13. Vorrichtung nach Anspruch 12, bei der die Funktion der beiden Leuchtdioden als Lichtquelle bzw. Lichtsensor in regelmäßigen oder unregelmäßigen Zeitabständen wechseln.

14. System zur Positionsüberwachung von beweglichen Objekten, bei dem jedes der zu überwachenden beweglichen Objekte mit einer Vorrichtung (1) nach einem der Ansprüche 1 bis 9 ausgestattet ist, wobei das System mindestens eine Funkgegenstelle (20) zum Empfang von gesendeten Nachrichten der einzelnen Vorrichtungen aufweist, sowie ein mit der mindestens einen Funkgegenstelle (20) verbundenes Computersystem (24), welches programmtechnisch eingerichtet ist, die erhaltenen Nachrichten auszuwerten und für jedes der überwachten Objekte einen Lagerort entsprechend der zuletzt empfangenen Positionsdaten zu speichern und auf Anfrage eines Benutzers auszugeben.

15. Verfahren zur Positionsüberwachung eines beweglichen Objektes, wobei das bewegliche Objekt mit einem Funksende- und Empfangsmodul (5), einem Funkortungsempfänger (2) für ein vorzugsweise satellitengestütztes Funkortungssystem (20) und einem Inertialsensor (3) zur Erkennung eines Bewegungszustandes des beweglichen Objektes ausgestattet ist, und bei dem nach Erkennung eines Bewegungszustandes des beweglichen Objektes der Funkortungsempfänger (2) aus einem inaktiven Zustand aktiviert und eine Positionsbestimmung anhand empfangener Funkortungssignale durchgeführt wird und bei dem anschließend ein Nachrichtensignal mit ermittelten Positionsdaten an eine Funkgegenstelle (20) gesendet wird.
